# EUROPÄISCHE PATENTSCHRIFT

(11) **EP 2 199 632 B1**
(45) Veröffentlichungstag und Bekanntmachung des Hinweises auf die Patenterteilung: **18.09.2013**
(21) Anmeldenummer: 08172379.3
(22) Anmeldetag: 19.12.2008
(51) Int. Cl.: F16C 33/66

(54) **Lagerelement mit porösen Elementen in Ringsegmenten**
Bearing assembly with porous elements in ring segments
Elément de palier doté d'éléments poreux dans des segments annulaires

(43) Veröffentlichungstag der Anmeldung: 23.06.2010
(73) Patentinhaber: Paul Müller GmbH & Co. KG Unternehmensbeteiligungen, 90411 Nürnberg (DE)
(72) Erfinder: Förtschbeck, Ewald, 91080, Uttenreuth (DE)
(74) Vertreter: Lösch, Christoph Ludwig Klaus

(56) Entgegenhaltungen:
- EP-A1- 0 654 613
- WO-A2-2007/110070
- FR-A- 367 353
- GB-A- 2 004 601
- JP-A- 2004 346 972

## Beschreibung

Die Erfindung betrifft ein Lagerelement mit Wälzkörpern, welche zwischen einem Innenring und einem konzentrisch zum Innenring angeordneten Außenring in Umfangsrichtung angeordnet sind.

Rotierende Maschinenteile bewegen sich im allgemeinen mit einer Rotationsgeschwindigkeit zu der Umgebung, an der sie befestigt sind. Die Verbindung zwischen den rotierenden Maschinenteilen und der Umgebung ist bei hohen Rotationsgeschwindigkeiten üblicherweise als Wälzlagerung bekannter Bauart ausgestaltet. Um die Drehfähigkeit über lange Zeit aufrechtzuerhal-ten, müssen diese Lager geschmiert werden.

EP 0 654 613 A1 offenbart ein Lagerelement mit Wälzkörpern, welche zwischen einem Innenring und einem konzentrisch zum Innenring angeordneten Außenring in Umfangsrichtung angeordnet sind, mit einem Käfig zur Halterung der Wälzkörper. Das Lagerelement weist Ringsemente mit porösen Elementen zur Aufnahme von Schmiermittel auf.

FR 367 353 A, GB 2 004 601 A und WO 2007/110070 A2 beschreiben weitere Lagerelemente mit porösen Elementen. JP 2004/246972 A offenbart ein Lagerelement mit fettgefüllten Ringsegmenten.

Der Erfindung liegt die Aufgabe zugrunde, ein Lagerelement mit besonders vorteilhaften Schmierungseigenschaften anzubieten.

Diese Aufgabe wird durch die Merkmale des Patentanspruchs 1 gelöst. Vorteilhafte Ausführungsformen sind in den Unteransprüchen beschrieben. Das erfindungsgemäße Lagerelement mit Wälzkörpern, welche zwischen einem Innenring und einem konzentrisch zum Innenring angeordneten Außenring in Umfangsrichtung angeordnet sind, insbesondere mit einem Käfig zur Halterung der Wälzkörper, weist in einzelnen Ringsegmenten entlang der Umfangsrichtung poröse Elemente zur Aufnahme von Schmiermittel auf.

Die porösen Elemente können mit einem für die spezielle Anwendung des Lagers optimal geeignetem Schmiermittel (z.B. mit geringer Oberflächenspannung und guter Fließfähigkeit) getränkt sein. Die durch die Relativbewegung des Außenrings zum Innenring während einer Rotationsbewegung erzeugten Strömungen innerhalb des Lagerelements transportieren das Schmiermittel in den Kontaktbereich der Wälzkörper mit den Lagerringen.

Durch eine Anordnung der porösen Elemente in einzelnen Ringsegmenten wird der Schmierstofftransport in Umfangsrichtung beeinflusst. Insbesondere entstehen innerhalb des Lagerelementes durch das Abwechseln von Ringsegmenten, die poröse Elemente aufweisen, und Ringsegmenten, die keine porösen Elemente aufweisen, Staustufen und Ablösestufen für den Schmiermittelfluss. Insgesamt wird dadurch die Schmierwirkung verbessert.

Hierbei sind die porösen Elemente insbesondere offenporige und gasdurchlässige poröse Elemente, wobei die porösen Elemente aus einem schwammartigen, saugfähigen Material auf textiler oder Kunststoffbasis bzw. aus Metallwolle, Sinterwerkstoff oder Metallschaum bestehen können.

In einer bevorzugten Ausführungsform sind die porösen Elemente äquidistant über den Umfang verteilt, d. h. der Abstand zwischen den einzelnen porösen

Elementen bleibt über den gesamten Umfang gleich. Dadurch kann eine über den Umfang gleichbleibende Schmierwirkung erzielt werden.

In vorteilhafter Weise weisen etwa 40% bis 60% der Ringsegmente entlang der Umfangsrichtung poröse Elemente auf. Dadurch treten entlang des Umfangs vermehrt Wechsel zwischen Ringsegmenten mit porösen Elementen und Ringsegmenten ohne poröse Elemente auf. Entsprechend treten auch vermehrt Stau- bzw. Ablösestufen innerhalb des Schmiermittelflusses auf und die Schmierwirkung erhöht sich.

Erfindungsgemäß weist mindestens eine radial verlaufende Außenfläche der porösen Elemente eine Anschrägung, nämlich eine in axialer Richtung verlaufende Anschrägung, auf. Durch diese Anschrägung kann insbesondere die Ablösung des Schmiermittels von dieser radial verlaufenden Außenfläche und/oder die Stauwirkung der radial verlaufenden Außenfläche beeinflusst werden.

In einer weiteren vorteilhaften Ausführungsform weisen die porösen Elemente eine ringsegmentartige Grundform mit einer Innenmantelfläche, einer konzentrisch zur Innenmantelfläche verlaufenden Außenmantelfläche sowie Stirnflächen als radial verlaufende Außenflächen auf. Dadurch ist ein besonders einfacher Einbau in das Lagerelement möglich.

In einer weiteren vorteilhaften Ausführungsform weist mindestens ein poröses Element einen sich in axialer Richtung erstreckenden Fortsatz auf. Dadurch kann das Volumen des porösen Elements und damit dessen Kapazität zur Schmiermittelaufnahme wirkungsvoll erhöht werden.

In einer weiteren vorteilhaften Ausführungsform ist das Lagerelement in axialer Richtung durch eine ringförmige Deckscheibe abgeschlossen und zumindest eines der porösen Elemente ist an der Deckscheibe angebracht. In weiteren Ausführungsformen können die porösen Elemente auch am Innen- oder Außenring und/oder am Käfig (Wälzkörperkäfig) angebracht sein.

In einer weiteren Ausführungsform weist das Lagerelement in einer ersten Ebene liegende Ringsegmente mit porösen Elementen und in einer zweiten Ebene, welche parallel zur ersten Ebene und in axialer Richtung zu dieser beabstandet verläuft, liegende Ringsegmente mit porösen Elementen auf. Dadurch kann die Anzahl der vorhandenen porösen Elemente vergrößert und gleichzeitig die Anzahl der Stau- und Ablösestufen erhöht werden.

Insbesondere können die erste und die zweite Ebene den Innenraum des Lagerelements in axialer Richtung begrenzen.

Die Erfindung ist anhand von Ausführungsbeispielen in den Zeichnungsfiguren weiter erläutert. Es zeigen:
- Fig. 1: eine schematisierte Darstellung eines Lagerelements;
- Fig. 2: eine Schnittdarstellung eines Lagerelements;
- Fig. 3: einen vergrößerten Ausschnitt aus Fig. 2.

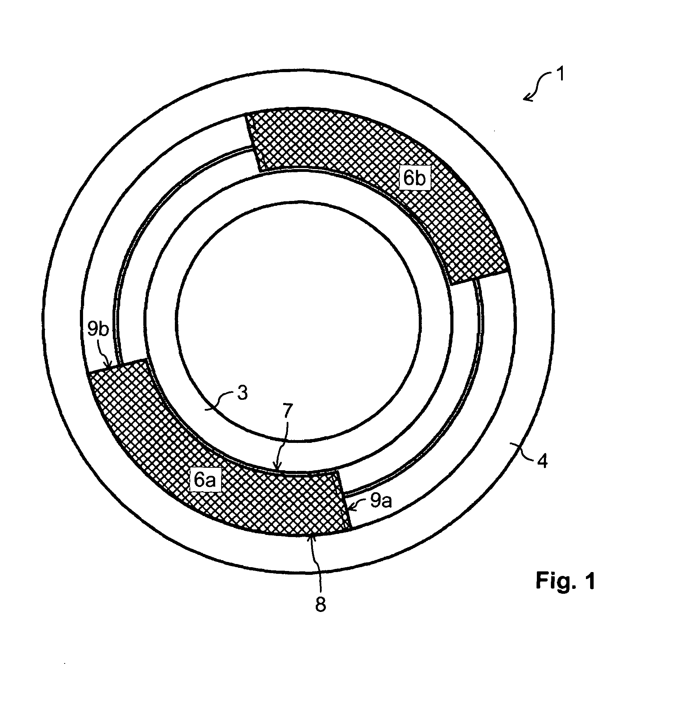

Fig. 1 zeigt ein ringförmiges Lagerelement 1 mit Wälzkörpern 2 (in Fig. 1 nicht dargestellt), welche zwischen einem Innenring 3 und einem konzentrisch zum Innenring 3 angeordneten Außenring 4 in Umfangsrichtung angeordnet sind. Das Lagerelement 1 weist in einzelnen Ringsegmenten entlang der Umfangsrichtung poröse Elemente 6a und 6b zur Aufnahme von Schmiermittel auf. Die porösen Elemente 6a und 6b besitzen eine ringsegmentartige Grundform mit einer Innenmantelfläche 7 und einer konzentrisch zur Innenmantelfläche 7 verlaufenden Außenmantelfläche 8 sowie radial verlaufende Stirnflächen 9a und 9b. Die Stirnfläche 9a besitzt eine in axialer Richtung verlaufende Anschrägung.

Die porösen Elemente 6a und 6b sind äquidistant angeordnet und überdecken jeweils ein Viertel des Umfangs. Zwischen den porösen Elementen 6a und 6b ist jeweils ein Ringsegment in der Größe eines Viertelkreises vorhanden, das keine porösen Elemente aufweist. Insgesamt sind somit in 50% der Ringsegmente entlang der Umfangsrichtung poröse Elemente vorhanden.

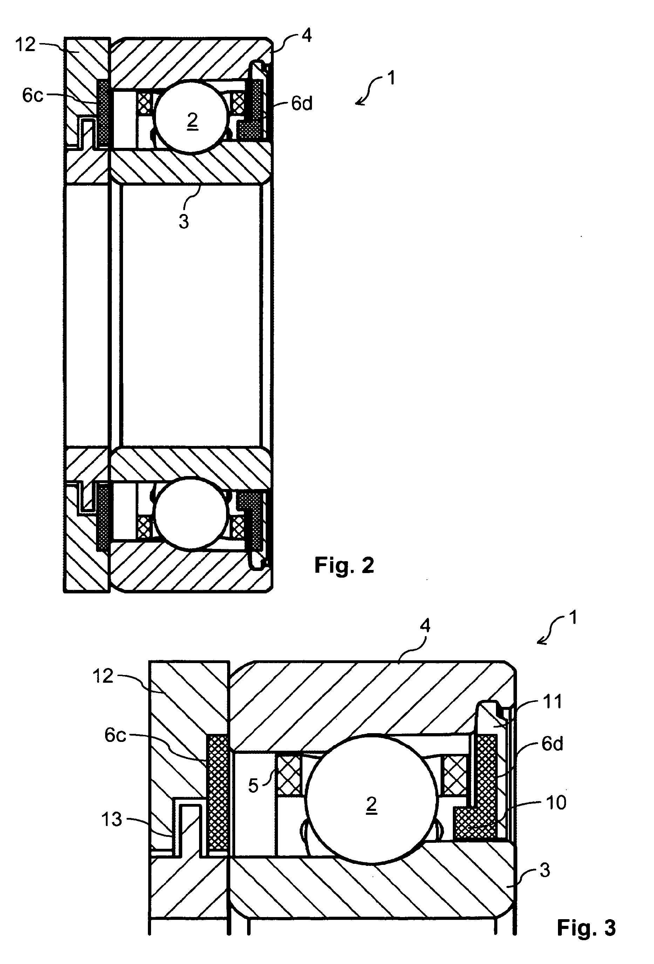

Fig. 2 und Fig. 3 zeigen eine Schnittdarstellung durch ein Lagerelement 1 sowie einen vergrößerten Ausschnitt aus dieser Schnittdarstellung. Zwischen einen Innenring 3 und einen Außenring 4 sind Wälzkörper 2 in einem Käfig 5 gehalten. In einzelnen Ringsegmenten entlang der Umfangsrichtung sind im Lagerelement 1 poröse Elemente 6c und 6d zur Aufnahme von Schmiermittel vorgesehen. Entlang des Umfangs sind jeweils mehrere poröse Elemente 6c und 6d angeordnet und zwischen den jeweiligen porösen Elementen 6c bzw. 6d sind Ringsegmente vorhanden, die keine porösen Elemente aufweisen.

Das poröse Element 6d weist ferner einen am Innenring 3 angeordneten, sich in axiale Richtung erstreckenden Fortsatz 10 auf. Das Lagerelement 1 wird in axialer Richtung durch eine ringförmige Deckscheibe 11 sowie den Abschlussdeckel 12 abgeschlossen, wobei das poröse Element 6d an der Deckscheibe 11 und das poröse Element 6c am Abschlussdeckel 12 angebracht ist. Ferner ist der Abschlussdeckel 12 als separates Bauteil ausgebildet und weist eine Labyrinthdichtung 13 auf.

Innerhalb des Lagerelements 1 gibt es in einer ersten Ebene liegende Ringsegmente mit porösen Elementen 6c und in einer zweiten Ebene, welche parallel zur ersten Ebene und in axialer Richtung zu dieser beabstandet verläuft, liegende Ringsegmente mit porösen Elementen 6d. Hierbei begrenzen die erste und die zweite Ebene den Innenraum des Lagerelements in axialer Richtung.

**BEZUGSZEICHENLISTE**

| | |
|---|---|
| 1 | Lagerelement |
| 2 | Wälzkörper |
| 3 | Innenring |
| 4 | Außenring |
| 5 | Käfig |
| 6a, 6b, 6c, 6d | poröses Element |
| 7 | Innenmantelfläche |
| 8 | Außenmantelfläche |
| 9a, 9b | Stirnfläche |
| 10 | Fortsatz |
| 11 | Deckscheibe |
| 12 | Abschlussdeckel |
| 13 | Labyrinthdichtung |

## Patentansprüche

1. Lagerelement (1) mit Wälzkörpern (2), welche zwischen einem Innenring (3) und einem konzentrisch zum Innenring (3) angeordneten Außenring (4) in Umfangsrichtung angeordnet sind, insbesondere mit einem Käfig (5) zur Halterung der Wälzkörper,
wobei das Lagerelement (1) in einzelnen Ringsegmenten entlang der Umfangsrichtung poröse Elemente (6a, 6b, 6c, 6d) zur Aufnahme von Schmiermittel aufweist, **dadurch gekennzeichnet, dass** mindestens eine radial verlaufende Außenfläche (9a) der porösen Elemente (6a, 6b, 6c, 6d) eine Anschrägung, nämlich eine in axialer Richtung verlaufende Anschrägung, aufweist.

2. Lagerelement (1) nach Anspruch 1, wobei die porösen Elemente (6a, 6b, 6c, 6d) äquidistant über den Umfang verteilt sind.

3. Lagerelement (1) nach einem der vorhergehenden Ansprüche, wobei die porösen Elemente (6a, 6b, 6c, 6d) 50% des Umfangs überdecken.

4. Lagerelement (1) nach einem der vorhergehenden Ansprüche, wobei die porösen Elemente (6a, 6b, 6c, 6d) eine ringsegmentartige Grundform mit einer Innenmantelfläche (7), einer konzentrisch zur Innenmantelfläche (7) verlaufenden Außenmantelfläche (8) sowie Stirnflächen (9a, 9b) als radial verlaufende Außenflächen aufweisen.

5. Lagerelement (1) nach einem der vorhergehenden Ansprüche, wobei mindestens ein poröses Element (6a, 6b, 6c, 6d) einen sich in axialer Richtung erstreckenden Fortsatz (10) aufweist.

6. Lagerelement (1) nach einem der vorhergehenden Ansprüche, wobei das Lagerelement (1) in axialer Richtung durch eine ringförmige Deckscheibe (11) abgeschlossen ist und zumindest eines der porösen Elemente (6d) an der Deckscheibe (11) angebracht ist.

7. Lagerelement (1) nach einem der vorhergehenden Ansprüche, wobei das Lagerelement (1) in einer ersten Ebene liegende Ringsegmente mit porösen Elementen (6c) und in einer zweiten Ebene, welche parallel zur ersten Ebene und in axialer Richtung zu dieser beabstandet verläuft, liegende Ringsegmente mit porösen Elementen (6d) aufweist.

8. Lagerelement nach Anspruch 7, wobei die erste und die zweite Ebene den Innenraum des Lagerelements (1) in axialer Richtung begrenzen.

## Claims

1. Bearing element (1) having rolling bodies (2) which are arranged in the circumferential direction between an inner ring (3) and an outer ring (4) which is arranged concentrically with respect to the inner ring (3), in particular having a cage (5) for holding the rolling bodies, the bearing element (1) having porous elements (6a, 6b, 6c, 6d) for receiving lubricant in individual ring segments along the circumferential direction, **characterized in that** at least one radially extending outer face (9a) of the porous elements (6a, 6b, 6c, 6d) has a chamfer, in particular a chamfer which extends in the axial direction.

2. Bearing element (1) according to Claim 1, the porous elements (6a, 6b, 6c, 6d) being distributed equidistantly over the circumference.

3. Bearing element (1) according to one of the preceding claims, the porous elements (6a, 6b, 6c, 6d) covering 50% of the circumference.

4. Bearing element (1) according to one of the preceding claims, the porous elements (6a, 6b, 6c, 6d) having a ring segment-like basic shape with an inner circumferential face (7), an outer circumferential face (8) which extends concentrically with respect to the inner circumferential face (7), and end faces (9a, 9b) as radially extending outer faces.

5. Bearing element (1) according to one of the preceding claims, at least one porous element (6a, 6b, 6c, 6d) having a projection (10) which extends in the axial direction.

6. Bearing element (1) according to one of the preceding claims, the bearing element (1) being closed in the axial direction by an annular cover disk (11), and at least one of the porous elements (6d) being attached to the cover disk (11).

7. Bearing element (1) according to one of the preceding claims, the bearing element (1) having ring segments which lie in a first plane with porous elements (6c) and ring segments which lie in a second plane, which extends parallel to the first plane and spaced apart from the latter in the axial direction, with porous elements (6d).

8. Bearing element according to Claim 7, the first and the second planes delimiting the interior of the bearing element (1) in the axial direction.

## Revendications

1. Élément de palier (1) comprenant des corps de roulement (2) qui sont disposés entre une bague intérieure (3) et une bague extérieure (4) disposée de manière concentrique à la bague intérieure (3) dans la direction périphérique, en particulier comprenant une cage (5) destinée à retenir les corps de roulement,
l'élément de palier (1) comprenant des éléments poreux (6a, 6b, 6c, 6d) pour recevoir du lubrifiant dans des segments annulaires individuels le long de la direction périphérique, **caractérisé en ce qu'**au moins une surface extérieure s'étendant radialement (9a) des éléments poreux (6a, 6b, 6c, 6d) présente un chanfrein, à savoir un chanfrein s'étendant dans la direction axiale.

2. Élément de palier (1) selon la revendication 1, dans lequel les éléments poreux (6a, 6b, 6c, 6d) sont distribués de manière équidistante sur la périphérie.

3. Élément de palier (1) selon l'une quelconque des revendications précédentes, dans lequel les éléments poreux (6a, 6b, 6c, 6d) recouvrent 50% de la périphérie.

4. Élément de palier (1) selon l'une quelconque des revendications précédentes, dans lequel les éléments poreux (6a, 6b, 6c, 6d) présentent une forme de base de type segment annulaire comprenant une surface d'enveloppe intérieure (7), une surface d'enveloppe extérieure (8) s'étendant de manière concentrique à la surface d'enveloppe intérieure (7) ainsi que des surfaces frontales (9a, 9b) en tant que surfaces extérieures s'étendant radialement.

5. Élément de palier (1) selon l'une quelconque des revendications précédentes, dans lequel au moins un élément poreux (6a, 6b, 6c, 6d) comprend un prolongement (10) s'étendant dans la direction axiale.

6. Élément de palier (1) selon l'une quelconque des revendications précédentes, l'élément de palier (1) étant fermé dans la direction axiale par un disque de recouvrement annulaire (11) et au moins l'un des éléments poreux (6d) étant monté sur le disque de recouvrement (11).

7. Élément de palier (1) selon l'une quelconque des revendications précédentes, l'élément de palier (1) comprenant des segments annulaires dotés d'éléments poreux (6c) et situés dans un premier plan et des segments annulaires dotés d'éléments poreux (6d) et situés dans un deuxième plan qui s'étend parallèlement au premier plan et de manière espacée de celui-ci dans la direction axiale.

8. Élément de palier selon la revendication 7, dans lequel les premier et deuxième plans délimitent l'espace intérieur de l'élément de palier (1) dans la direction axiale.
